# EUROPÄISCHE PATENTSCHRIFT

(11) **EP 4 185 447 B1**
(45) Veröffentlichungstag und Bekanntmachung des Hinweises auf die Patenterteilung: **10.07.2024**
(21) Anmeldenummer: 21746741.4
(22) Anmeldetag: 21.07.2021
(51) Int. Cl.: B27D 1/00, B27D 1/10, B27G 11/00

(54) **VORRICHTUNG UND VERFAHREN ZUM HERSTELLEN EINES KLEBSTOFFFADENS UND ZUM VERBINDEN VON WERKSTÜCKEN MIT DEM KLEBSTOFFFADEN**
DEVICE AND METHOD FOR PRODUCING AN ADHESIVE THREAD AND FOR CONNECTING WORKPIECES USING THE ADHESIVE THREAD
DISPOSITIF ET PROCÉDÉ DE PRODUCTION D'UN FIL ADHÉSIF ET DE LIAISON DE PIÈCES À L'AIDE DU FIL ADHÉSIF

(30) Priorität: 21.07.2020 DE 102020119187
(43) Veröffentlichungstag der Anmeldung: 31.05.2023
(73) Patentinhaber: Heinrich Kuper GmbH, 33397 Rietberg (DE)
(72) Erfinder: KESPOHL, Hans Werner, 33129 Delbrück (DE); HAGENHOFF, Heinz Georg, 33129 Delbrück (DE); LAUMEIER, Reinhold, 33397 Rietberg (DE)
(74) Vertreter: Hoefer & Partner Patentanwälte mbB
(86) Internationale Anmeldenummer: PCT/EP2021/070346
(87) Internationale Veröffentlichungsnummer: WO 2022/018120

(56) Entgegenhaltungen:
- DE-B- 1 220 583
- US-A- 3 849 222
- US-A- 4 389 966

## Beschreibung

Die vorliegende Erfindung betrifft eine Klebstofffadenvorrichtung zum oxidationsfreien Aufschmelzen eines Klebstoffs und Herstellung eines Klebstofffadens, eine Vorrichtung zum Verbinden von Werkstücken, ein Herstellverfahren zum oxidationsfreien Herstellen eines Klebstofffadens sowie ein Verfahren zur Verbinden von Werkstücken, insbesondere Holzwerkstücken wie Parkettstäben oder Furnierstreifen mit einem Klebstofffaden, wobei keine Probleme durch Oxidation des Klebstoffs auftreten.

Maschinen zum Verbinden von Holzwerkstücken sind aus dem Stand der Technik in unterschiedlichen Ausgestaltungen bekannt. Grundsätzlich können derartige flächige Streifen an ihren Kanten miteinander verklebt werden, wie beispielsweise aus der DE 10 2016 210 552 B3 bekannt, oder an einer Rückseite der Werkstücke wird ein sogenannter Leimfaden mäanderförmig über die Stoßstelle zwischen zwei aneinander liegenden Werkstücken geführt, wobei zusätzlich noch an den Stoßkanten Klebstoff vorgesehen sein kann. Der verwendete Leimfaden wird dabei im Vorfeld hergestellt und mittels eines relativ aufwändigen Heizungssystems vor dem Aufbringen aufgeschmolzen und auf die Oberseite bzw. Unterseite der flächigen Holzwerkstücke aufgebracht, um so einen sogenannten Furnierteppich oder dergleichen zu erhalten. Ein großer Nachteil derartiger Maschinen liegt hierbei in den Heizungssystemen, die für das Aufschmelzen der vorgefertigten Leimfäden benutzt werden. Diese sind in ihren baulichen Abmaßen sowie in ihrer Energieleistung begrenzt, wodurch die Durchlaufgeschwindigkeiten der Werkstücke immer mit den Schmelztemperaturen der Leimfäden synchronisiert werden müssen. Weiterhin ist es bekannt, einen Leimfaden durch ein offenes Becken zu führen, in welchem geschmolzener Klebstoff vorhanden ist. Durch das offene Becken kommt es an der Oberfläche sofort zu einer Oxidation des Klebstoffs und ferner bei der holzverarbeitenden Industrie zu Verschmutzungen durch Holzstaub und dergleichen. Ferner kann keine konstante Temperatur des Klebstoffs im offenen Schmelzbecken garantiert werden. Daher wird häufig mit zu hoher Temperatur gearbeitet, wodurch Verkohlungen des Klebstoffs auftreten, welche bei ungünstigen Bedingungen die Maschine verkleben bzw. noch ungünstiger auf die Furnierteppiche oder dergleichen aufgebracht werden. Ferner zeigt die US 4,042,440 B eine Vorrichtung und ein Verfahren zum Verbinden von Furnierstreifen, welches mittels tropfenförmig und ganzheitlich an einem Faden aufgebrachten Klebstoff verbunden werden. Ferner ist aus der US 4 389 966 A eine Klebstofffadenvorrichtung zum Aufschmelzen eines Klebstoffs und Herstellung eines Klebstofffadens bekannt. Die US 4 389 966 A offenbart die Präambel des ersten Anspruches.

Es ist eine Aufgabe der vorliegenden Erfindung, eine Vorrichtung und ein Verfahren zum Herstellen eines Klebstofffadens und eine Vorrichtung und ein Verfahren zum Verbinden von Werkstücken, insbesondere flächigen, streifenförmigen Holzwerkstücken, mit einem Klebstofffaden bereitzustellen, welche bei einfachem Aufbau und einfacher, kostengünstiger Herstellbarkeit eine sichere Verbindung der Werkstücke unabhängig von einer Durchlaufgeschwindigkeit der Werkstücke ermöglicht.

Diese Aufgabe wird durch eine Vorrichtung mit den Merkmalen des Anspruchs 1 und ein Verfahren mit den Merkmalen des Anspruchs 11 14 gelöst. Die Unteransprüche zeigen jeweils bevorzugte Weiterbildungen der Erfindung.

Die erfindungsgemäße Klebstofffadenvorrichtung zur Herstellung eines Klebstofffadens mit den Merkmalen des Anspruchs 1 weist den Vorteil auf, dass ein Klebstofffaden aus einem Rohfaden hergestellt werden kann, bei dem keine Sauerstoffeinwirkung auf den Klebstoff auftritt und eine Klebefähigkeit des Klebstoffs nachteilig beeinflusst. Insbesondere treten auch keine Probleme mit vorzeitig erstarrtem Klebstoff auf, da die Herstellung des Klebstofffadens in der erfindungsgemäßen Klebstofffadenvorrichtung oxidationsfrei ermöglicht wird. Daraus ergibt sich auch ein reduzierter Reinigungsaufwand der Klebstofffadenvorrichtung. Weiterhin ist es möglich, dass problemlos ein Stillstand der Klebstofffadenvorrichtung über Nacht ausgeführt werden kann und ein neues Anfahren der Klebstofffadenvorrichtung nach einem längeren Stillstand problemlos ohne Probleme mit verklebten Klebstoffresten möglich ist.

Ein weiterer Vorteil der Erfindung liegt darin, dass keine großen Mengen von Dämpfen des Klebstoffs entweichen können und beispielsweise einen Nutzer der Vorrichtung gefährden könnten. Weiterhin ist es möglich, auf einfache Weise ein exaktes Maß des Klebstofffadens durch eine exakte Kalibrierung zu erreichen. Ferner wird der Klebstoff nur einmalig mit seiner Schmelztemperatur belastet und in ausreichender Menge bei exakter Einhaltung der Schmelztemperatur vorgehalten. Dadurch können Überhitzungen vermieden werden. Weiterhin ist es insbesondere möglich, dass verschiedenste Durchlaufgeschwindigkeiten des Klebstofffadens bei der Verarbeitung ermöglicht werden.

Dies wird erfindungsgemäß dadurch erreicht, dass die Klebstofffadenvorrichtung zur Herstellung des Klebstofffadens eine Zufuhreinrichtung zum Zuführen eines klebstofffreien Rohfadens und einen Klebstoffbehälter zur Aufnahme und Lagerung eines Klebstoffgranulats aufweist. Ferner ist eine Hauptheizung vorgesehen, welche an einem unteren Bereich des Klebstoffbehälters angeordnet ist. Der untere Bereich bildet dabei eine Aktivierungszone, in welchem der Klebstoff oxidationsfrei aufgeschmolzen wird. Über der Aktivierungszone ist eine Lagerzone des Kunststoffgranulats, welche den aufgeschmolzenen Klebstoff vor einer Einwirkung von Sauerstoff gut abschirmt, da das Klebstoffgranulat, welches über dem geschmolzenen Klebstoff aufgestapelt ist, das Vordringen von Luft und somit Sauerstoff bis zum geschmolzenen Klebstoff sicher verhindert, solange eine ausreichende dicke Lage an Klebstoffgranulat vorgesehen ist. Ferner umfasst die Vorrichtung ein im Wesentlichen waagerecht verlaufendes, geschlossenes Behältnis, welches mit einem ersten Ende am unteren Bereich des Klebstoffbehälters angeordnet ist und durch Schwerkrafteinwirkung mit geschmolzenem Klebstoff vollständig gefüllt wird. Das geschlossene Behältnis weist wenigstens eine Eingangsöffnung zum Zuführen des Rohfadens und wenigstens eine Ausgangsöffnung zum Herausführen eines Klebstofffadens auf, welcher aus dem Rohfaden und an dem Rohfadens durch die Durchführung im geschmolzenen Klebstoff an der gesamten Außenfläche anhaftenden Klebstoffanteile hergestellt wird. Ferner ist am geschlossenen Behältnis bevorzugt eine Zusatzheizung angeordnet, um den in dem geschlossenen Behältnis befindlichen geschmolzenen Klebstoff auf einer vorbestimmten Verarbeitungstemperatur zu halten. Dies kann beispielsweise durch Vorsehen eines einfachen Regelkreises zur Temperaturüberwachung des geschmolzenen Klebstoffs im geschlossenen Behältnis ausgeführt sein. Insbesondere kann die oxidationsfreie Beschichtung des Rohfadens durch das Durchführen des Rohfadens durch das geschlossene Behältnis, in welchem der geschmolzene Klebstoff vorhanden ist, sichergestellt werden. Der derart erzeugte Klebstofffaden kann dann beispielsweise sofort zum Verbinden von Werkstücken, insbesondere Holzwerkstücken wie Furnierstreifen oder dgl., verwendet werden oder der erzeugte Klebstofffaden wird getrocknet und auf einer Rolle oder dgl. aufgewickelt und später verwendet. Ferner ist ein zumindest teilweise luftgefülltes Ausdehnungsrohr am geschlossenen Behälter angeordnet, um Volumenänderungen des geschmolzenen Klebstoffs ausgleichen zu können.

Die erfindungsgemäße Vorrichtung braucht dabei nicht zwingend eine Fördereinrichtung oder dergleichen, um den geschmolzenen Klebstoff in das geschlossene Behältnis zu fördern. Der geschmolzene Klebstoff kann selbständig aufgrund der Schwerkraft aus dem Klebstoffbehälter in das geschlossene Behältnis strömen. Dadurch kann die Vorrichtung sehr kostengünstig und einfach aufgebaut sein. Besonders bevorzugt wird der Schwerkrafttransport dadurch unterstützt, dass die Ausgangsöffnungen am geschlossenen Behältnis immer in oder unter einer Mitte der Aktivierungszone liegen. Alternativ wird eine im wesentlichen drucklose Fördereinrichtung zur Förderung des geschmolzenen Klebstoffs verwendet.

Vorzugsweise ist an der Ausgangsöffnung für den durch das Durchführen des Rohfadens durch den geschmolzenen Klebstoff hergestellten Klebstofffadens eine Düse angeordnet, um eine exakte Kalibrierung eines Durchmessers des Klebstofffadens zu ermöglichen. Die Düse ist vorzugsweise austauschbar angeordnet, so dass unterschiedliche Durchmesser auf einfache Weise kalibriert werden können. Dabei ist eine sehr einfache und schnelle Umrüstung der Vorrichtung möglich.

Weiter bevorzugt ist an der Eingangsöffnung eine Führungsvorrichtung, beispielsweise ein dünnes Rohr und bevorzugt zusätzlich eine Fadenbremse, z.B. eine Umschlingungsbremse oder Tellerbremse, vorgesehen, um eine gerichtete Zuführung des Rohfadens in das geschlossene Behältnis zu ermöglichen.

Das geschlossene Behältnis ist vorzugsweise brückenartig über den zu verbindenden Werkstücken angeordnet. Besonderes bevorzugt ist das geschlossene Behältnis ein Verteilerrohr.

Weiter bevorzugt umfasst die Klebstofffadenvorrichtung eine Vielzahl von separaten Rohfäden und eine Vielzahl von Eingangsöffnungen sowie Ausgangsöffnungen, wobei die Rohfäden jeweils parallel zu einer separaten Eingangsöffnung zugeführt werden und aus einer separaten, der jeweiligen Eingangsöffnung zugeordneten Ausgangsöffnung herausgeführt werden. Dadurch können auf einfache Weise parallel mehrere Klebstofffäden hergestellt und vorzugsweise gleich verwendet werden.

Gemäß einer weiteren bevorzugten Ausgestaltung der Erfindung umfasst die Klebstofffadenvorrichtung ferner eine Kühleinheit, welche über der Hauptheizung am Klebstoffbehälter angeordnet ist. Die Kühleinheit stellt dabei sicher, dass nicht zu viel Klebstoffgranulat durch die Hauptheizung aufgeschmolzen wird. Besonders bevorzugt ist die Kühleinheit dabei in Vertikalrichtung verschiebbar angeordnet. Dadurch kann eine Aktivierungszone am Klebstoffbehälter mit unterschiedlichen Höhen eingestellt werden. Somit kann beispielsweise bei Wahl einer schnellen Durchlaufzeit für die Klebstofffäden die Kühleinheit weiter nach oben geschoben werden, um einen großen Vorrat an geschmolzenem Klebstoff im Klebstoffbehälter zu haben, welcher dann entsprechend dem Verbrauch von Klebstoff in das geschlossene Behältnis nachgeführt werden kann.

Weiter umfasst die Klebstofffadenvorrichtung ein zumindest teilweise luftgefülltes Ausdehnungsrohr am geschlossenen Behältnis, um Volumenänderungen des geschmolzenen Klebstoffs ausgleichen zu können. Dadurch wird ferner der drucklose Zustand des geschmolzenen Klebstoffs im geschlossenen Behältnis aufrechterhalten. Somit kann sichergestellt werden, dass der auf geschmolzene Klebstoff im geschlossenen Behältnis drucklos an der Eingangsöffnung und der Ausgangsöffnung vorliegt. Dadurch wird verhindert, dass Klebstofftröpfchen aus der Eingangsöffnung oder der Ausgangsöffnung austreten und zu einem Verkleben und/oder Verstopfen der Eingangs- und Ausgangsöffnungen führen. Weiterhin wird verhindert, dass Klebstofftröpfchen am Klebstofffaden anhaften und auf den zu verbindenden Werkstücken zu Verschmierungen und/oder überschüssigen Klebstoffflecken oder dergleichen führen. Das Ausdehnungsrohr ist am geschlossenen Behältnis vorzugsweise zwischen dem Klebstoffbehälter und der Eingangsöffnung und Ausgangsöffnung angeordnet. Weiter bevorzugt ist das Ausdünnungsrohr offen ausgeführt oder alternativ geschlossen ausgeführt. Bei geschlossenem Ausdehnungsrohr kann insbesondere sichergestellt werden, dass keinerlei Ausgasungen an der Klebstofffadenvorrichtung auftreten.

Die Klebstofffadenvorrichtung umfasst eine Fördereinrichtung, welche eingerichtet ist, den geschmolzenen Klebstoff im wesentlichen drucklos in das geschlossene Behältnis zu fördern und/oder im geschlossenen Behältnis zu fördern. Die Fördereinrichtung ist vorzugsweise ein Extruder und weiter bevorzugt ein heizbarer Extruder. Der Extruder wird weiter bevorzugt von einer Steuereinheit mit einer Drehzahl gesteuert, welche zu einer Abwicklungsgeschwindigkeit des Rohfadens angepasst ist. Dadurch wird der drucklose Zustand des geschmolzenen Klebstoffs im geschlossenen Behältnis aufrechterhalten.

Vorzugsweise ist die Eingangsöffnung und/oder Ausgangsöffnung am geschlossenen Behältnis in einem vorbestimmten, spitzen Winkel zu einer Geraden, die senkrecht zu einer Längsachse des waagrecht angeordneten geschlossenen Behältnisses ist. Der Winkel ist vorzugsweise in einem Bereich von 0° bis ± 30° ausgebildet und kann im Raum frei gewählt werden. Alternativ wird der Rohfaden in einem rechten Winkel zu einer Mittelachse des geschlossenen Behältnisses zugeführt.

Weiter bevorzugt ist am Klebstoffbehälter ein Füllstandssensor angeordnet, um eine ausreichende Füllhöhe mit Klebstoffgranulat sicherzustellen. Die ausreichende Füllhöhe stellt dabei auch sicher, dass kein Sauerstoff zum auf geschmolzene Klebstoff gelangen kann, da insbesondere eine Körnung des Klebstoffgranulats sehr fein ist.

Weiterhin betrifft die vorliegende Erfindung eine Vorrichtung zum Verbinden von Werkstücken mit einem Klebstofffaden, welche eine erfindungsgemäße Klebstofffadenvorrichtung und eine Arbeitsebene zum Auflegen der zu verbindenden Werkstücke umfasst. Die Arbeitsebene verläuft dabei unterhalb des geschlossenen Behältnisses der Klebstofffadenvorrichtung. Ferner ist eine Andrückeinrichtung vorgesehen, um den Klebstofffaden auf die zu verbindenden Werkstücke anzudrücken. Dadurch kann eine sichere Verbindung von Werkstücken, insbesondere von streifenförmigen Holzwerkstücken wie Furnierstreifen oder Parkettstreifen oder Holzlamellen oder dgl. oder von Holzersatzwerkstoffen ermöglicht werden. Weiter bevorzugt kann der hergestellte Klebstofffaden sofort verwendet werden und die streifenförmigen Werkstücke unmittelbar verbinden. Somit kann eine kombinierte Maschine zur Herstellung eines Klebstofffadens und gleichzeitig zur Verbindung von Werkstücken bereitgestellt werden. Hierbei ist es insbesondere auch möglich, dass unterschiedlichste Durchlaufgeschwindigkeiten des Klebstofffadens ermöglicht werden, beispielsweise in Abhängigkeit der zu verbindenden Werkstücke. Dabei müssen keine Abstriche bei einer Effizienz und Qualität des Zusammensetzens der Werkstücke gemacht werden. Weiterhin muss ein Nutzer nicht vorgegebene Klebstofffäden verwenden, sondern kann individuell ausgesuchte Rohmaterialien für einen Rohfaden und für einen Klebstoff entsprechend seinen Anfordernissen auswählen und direkt den entsprechenden Klebstofffaden herstellen. Die Herstellung des Klebstofffadens erfolgt dabei oxidationsfrei, so dass die gesamte Vorrichtung nicht mit den üblicherweise vorhandenen Nachteilen von erstarrten Klebstoffresten beeinträchtigt ist.

Vorzugsweise werden die in der Klebstofffadenvorrichtung erzeugten Klebstofffäden alle über der Arbeitsebene und von oben auf die Werkstücke aufgebracht. Alternativ werden die Klebstofffäden sowohl über der Arbeitsebene zugeführt als auch unter der Arbeitsebene zu den zu verbindenden Werkstücken zugeführt. Dadurch kann gleichzeitig eine Verbindung durch Klebstofffäden an einer Oberseite und an einer Unterseite der zu verbindenden Werkstücke realisiert werden. Alternativ ist es auch möglich, dass die Vorrichtung ferner eine Wendestation umfasst, in welcher die zu verbindenden Werkstücke, welche schon von oben mit wenigstens einem Klebstofffaden verbunden sind, um 180° gedreht werden und dann an ihrer Unterseite nochmals durch die Vorrichtung hindurchgeschickt werden, um eine zweite Verbindung an der Unterseite auszuführen.

Gemäß einer weiteren bevorzugten Ausgestaltung der Erfindung werden eine Vielzahl von Klebstofffäden gleichzeitig an den zu verbindenden Werkstücken angebracht. Dabei können die Vielzahl von Klebstofffäden ausschließlich an einer Seite der Werkstücke angebracht werden oder alternativ an einer Oberseite und an einer Unterseite gleichzeitig angebracht werden.

Ferner betrifft die vorliegenden Erfindung ein Herstellverfahren zum Herstellen eines Klebstofffadens, welcher eingerichtet ist, zum Verbinden von Werkstücken, insbesondere Holzwerkstücken oder holzähnlichen Werkstücken, verwendet zu werden. Das Herstellverfahren umfasst dabei die Schritte des oxidationsfreien Schmelzens eines Klebstoffgranulats zu einem geschmolzenen Klebstoff in einer Aktivierungszone eines Klebstoffbehälters, wobei über der Aktivierungszone eine Lagerzone von Klebstoffgranulat verbleibt, um den geschmolzenen Klebstoff vor einer Oxidation zu schützen. Somit wird das Klebstoffgranulat im unteren Bereich des Klebstoffbehälters aufgeschmolzen, wohingegen im oberen Bereich das Klebstoffgranulat in seiner ursprünglichen granulatartigen Form verbleibt. Der oxidationsfrei geschmolzene Klebstoff wird in ein geschlossenes Behältnis ausschließlich mittels Schwerkraft zugeführt oder alternativ mit einer Fördereinrichtung, welche eingerichtet ist, den geschmolzenen Klebstoff im wesentlichen drucklos zu fördern. Anschließend wird ein Rohfaden durch eine Eingangsöffnung in das geschlossene Behältnis zum oxidationsfreien Beschichten einer gesamten Außenfläche des Rohfadens mit geschmolzenem Klebstoff zu einem Klebstofffaden zugeführt und der derart hergestellte Klebstofffaden aus einer Ausgangsöffnung aus dem geschlossenen Behältnis herausgeführt. Somit kann der klebstofffreie Rohfaden vollständig mit dem geschmolzenen Klebstoff ummantelt werden, so dass seine gesamte Außenfläche mit Klebstoff benetzt ist. Dabei kann im geschlossenen Behältnis der Rohfaden oxidationsfrei mit dem geschmolzenen Klebstoff benetzt werden, um den Klebstofffaden herzustellen.

Besonders bevorzugt wird der Klebstofffaden beim Herausführen aus dem geschlossenen Behältnis kalibriert, insbesondere mittels einer Düse. Dadurch weist der hergestellte Klebstofffaden einen vorbestimmten Außendurchmesser auf, welcher beispielsweise in Abhängigkeit der zu verbindenden Werkstoffe gewählt werden kann. Dabei ist die Düse vorzugsweise austauschbar.

Weiter bevorzugt werden mehrere Klebstofffäden parallel und gleichzeitig hergestellt.

Weiterhin erfolgt bevorzugt eine zusätzliche Erwärmung des geschmolzenen Klebstoffs im geschlossenen Behältnis durch eine Zusatzheizung, um ein Erstarren des geschmolzenen Klebstoffs zu verhindern und immer eine vorbestimmte Temperatur im geschlossenen Behältnis bereitzustellen. Weiter bevorzugt wird das Klebstoffgranulat im Klebstoffbehälter teilweise gekühlt, um ein vorzeitiges Schmelzen des Klebstoffgranulats zu verhindern. Ferner betrifft die vorliegende Erfindung ein Verfahren zum Verbinden von Werkstücken mit einem Klebstofffaden, welcher gemäß dem erfindungsgemäßen Herstellverfahren hergestellt ist. Der derart hergestellte Klebstofffaden wird dann auf die zu verbindenden Werkstücke, welche auf einer Arbeitsebene zugeführt werden, aufgebracht. Vorzugsweise wird der hergestellte Klebstofffaden direkt nach seiner Herstellung auf die zu verbindenden Werkstücke aufgebracht.

Besonders bevorzugt wird ein Vorschub des Klebstofffadens und dadurch auch des Rohfadens durch einen Vorschub der zu verbindenden Werkstücke ausgeführt. Der Vorschub der Werkstücke kann beispielsweise manuell durch einen Nutzer der Vorrichtung erfolgen oder durch eine angetriebene Rollenbahn oder dergleichen.

Weiter bevorzugt wird der Klebstoff in einem Klebstoffbehälter derart aufgeschmolzen, dass eine Oberfläche des aufgeschmolzenen Klebstoffs in Vertikalrichtung immer über einer Ausgangsöffnung aus dem geschlossenen Behältnis liegt.

Der geschmolzene Klebstoff wird aus dem Klebstoffbehälter ausschließlich mittels Schwerkraft in das geschlossene Behältnis zugeführt oder alternativ mit einer Fördereinrichtung, welche eingerichtet ist, den geschmolzenen Klebstoff im wesentlichen drucklos zu fördern.

Am geschlossenen Behältnis ist eine Ausdehnungsmöglichkeit für den geschmolzenen Klebstoff vorhanden. Die Ausdehnungsmöglichkeit ist ein offenes oder geschlossenes Ausdehnungsrohr oder dergleichen.

Besonders bevorzugt wird ein Vorschub des Rohfadens durch einen Vorschub der zu verbindenden Werkstücke ausgeführt. Dies ist möglich, da der hergestellte Klebstofffaden direkt nach seiner Herstellung zum Verbinden der Werkstücke verwendet wird und somit an den Werkstücken haftet. Sobald die Werkstücke bewegt werden, bewegt sich auch der Klebstofffaden und damit auch der Rohfaden, welcher vorzugsweise von einer Rolle abgerollt wird.

Die erfindungsgemäßen Vorrichtungen und die erfindungsgemäßen Verfahren werden besonders bevorzugt bei der Verbindung von streifenförmigen und/oder flächigen Holzwerkstücken, beispielsweise Furnierstreifen, Stabparkett, Holzlamellen oder dergleichen verwendet. Selbstverständlich können auch Holzersatzwerkstoffe verwendet werden. Nachfolgend wird unter Bezugnahme auf die begleitende Zeichnung ein bevorzugtes Ausführungsbeispiel der Erfindung im Detail beschrieben. In der Zeichnung ist:
- Fig. 1: eine schematische, teilweise geschnittene Ansicht einer Vorrichtung zum Verbinden von Werkstücken gemäß einem bevorzugten Ausführungsbeispiel der Erfindung,
- Fig. 2: eine schematische Seitenansicht der Vorrichtung von Fig. 1 im teilweise geschnittenen Zustand, und
- Fig. 3: eine schematische Draufsicht der Vorrichtung von Fig. 1.

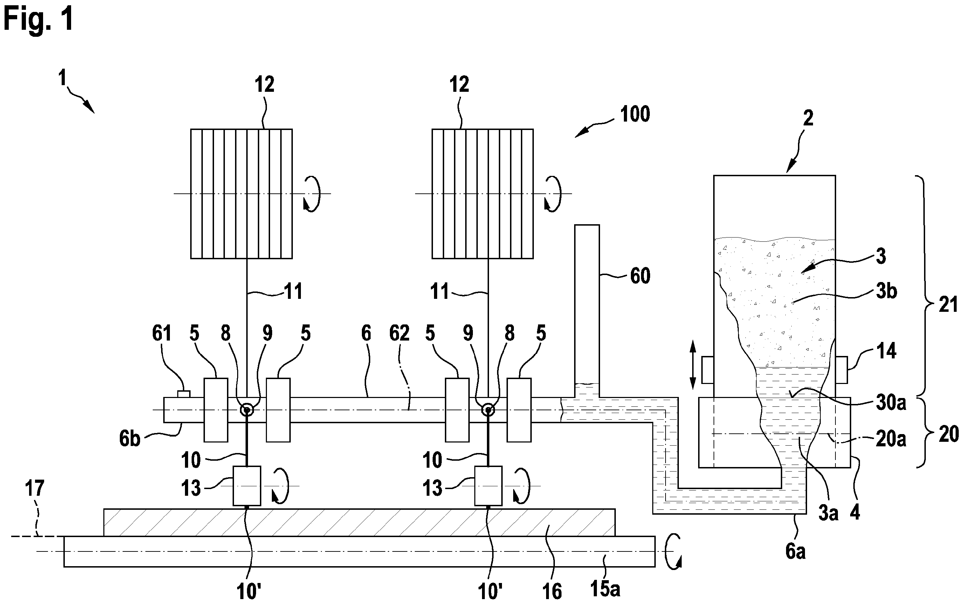

Nachfolgend wird unter Bezugnahme auf die Fig. 1 bis 3 eine Klebstofffadenvorrichtung 100 und ein Herstellungsverfahren für einen Klebstofffaden 10, eine Vorrichtung 1 zum Verbinden von Werkstücken 16 und ein Verfahren zum Verbinden von Werkstücken 16 im Detail beschrieben.

Wie aus Fig. 1 ersichtlich ist, umfasst die Vorrichtung 1 einen mit Klebstoff 3 gefüllten Klebstoffbehälter 2, welcher eine Aktivierungszone 20 und darüber eine Lagerzone 21 aufweist. In der Lagerzone 21 ist ein Klebstoffgranulat 3b vorgehalten. In der Aktivierungszone 20 ist geschmolzener Klebstoff 3a vorhanden.

Der Klebstoff 3 wird mittels einer Hauptheizung 4, welche an einem unteren Bereich des Klebstoffbehälters 2 angeordnet ist, erwärmt und aufgeschmolzen.

Die Werkstücke 16 werden dabei in einer waagerechten Arbeitsebene 17 unterhalb der Klebstofffadenvorrichtung 100 zugeführt. Die Arbeitsebene 17 wird durch eine Rollenbahn 15 mit einer Vielzahl von Rollen 15a definiert. Die Rollenbahn 15 muss keinen eigenen Antrieb aufweisen, sondern die Vorrichtung 1 kann durch manuelles Verschieben der Werkstücke 16 auf der Arbeitsebene 17 in Betrieb genommen werden, was später erläutert wird.

Wie weiter aus Fig. 1 ersichtlich ist, ist am Klebstoffbehälter 2 ferner eine Kühleinheit 14 angeordnet. Die Kühleinheit 14 ist über der Hauptheizung 4 positioniert und kühlt somit das Klebstoffgranulat 3b, welches im Bereich über der Hauptheizung 4 angeordnet ist. Dadurch wird verhindert, dass das Klebstoffgranulat 3b, welches über der Hauptheizung 4 angeordnet ist, zu früh aufgeschmolzen wird. Die Kühleinheit 14 kann vertikal verschoben werden.

Ferner umfasst die Vorrichtung 1 ein geschlossenes Behältnis 6, welches in diesem Ausführungsbeispiel ein waagerecht angeordnetes Verteilerrohr ist. Das Verteilerrohr ist dabei derart an die Aktivierungszone 20 des Klebstoffbehälters 2 angeschlossen, so dass geschmolzener Klebstoff 3a ausschließlich durch die Schwerkraft auch in das Innere des geschlossenen Verteilerrohrs gelangt. Somit ist das geschlossene Behältnis 6 mit einem ersten Ende 6a am Klebstoffbehälter 2 angeordnet. Das erste Ende 6a ist dabei außermittig am Boden des Klebstoffbehälters angeordnet. Am zweiten Ende 6b ist eine Entlüftungsöffnung 61 vorgesehen, um einerseits ein Befüllen des geschlossenen Behältnisses 6 zu ermöglichen und andererseits eine Kontrollmöglichkeit zu haben, ob das geschlossene Behältnis vollständig mit geschmolzenem Klebstoff 3a aufgefüllt ist. Zum Öffnen und Schließen der Entlüftungsöffnung ist eine Entlüftungsschraube vorgesehen sowie ferner ein Fülldruckmanometer angeordnet.

Es sei angemerkt, dass zusätzlich auch noch eine im wesentlichen drucklose Fördereinrichtung, beispielsweise ein heizbarer Extruder vorgesehen sein kann, um den geschmolzenen Klebstoff drucklos in das geschlossene Behältnis und/oder drucklos im geschlossenen Behältnis zu fördern. Die Fördereinrichtung kann dabei im Klebstoffbehälter selbst vertikal angeordnet sein und/ oder auch im geschlossenen Behältnis.

Der Klebstoff 3 kann somit im geschlossenen Behältnis 6 unter Ausschluss von Sauerstoff im geschmolzenen Zustand aufbewahrt werden. Damit eine Temperatur im geschlossenen Behältnis 6 nicht absinkt, ist eine Vielzahl von Zusatzheizungen 5 am geschlossenen Behältnis 6 angeordnet.

Die Temperatur des geschmolzenen Klebstoffs 3a im geschlossenen Behältnis 6 kann durch eine Überwachungsregelung mittels eines Temperatursensors und einer Steuereinheit, welche die Hauptheizung 4 und die Zusatzheizungen 5 steuert, geregelt werden.

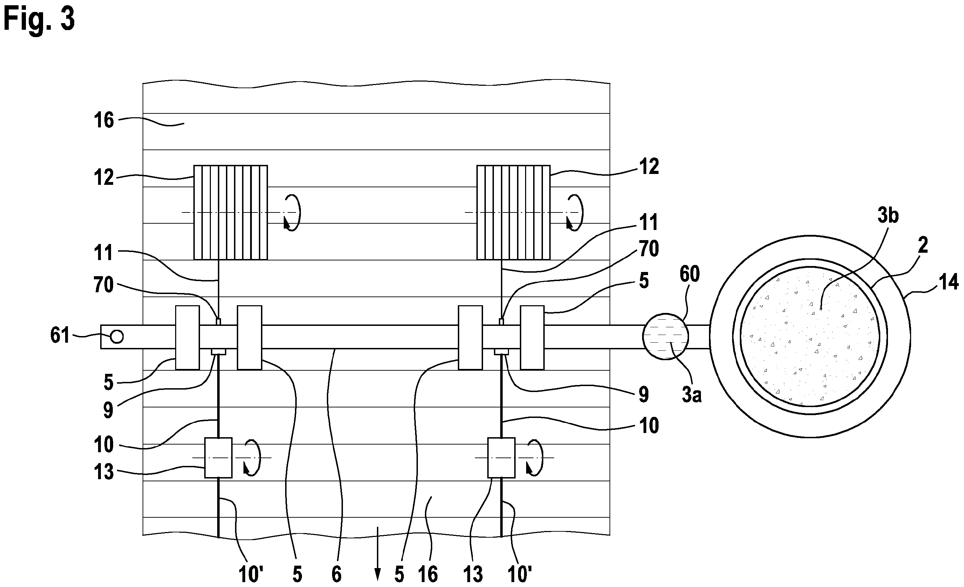

Ferner weist das geschlossene Behältnis 6 Eingangsöffnungen 7 und Ausgangsöffnungen 8 auf. Wie aus Fig. 3 ersichtlich ist, sind die Eingangsöffnungen 7 und Ausgangsöffnungen 8 derart angeordnet, dass zu jeder Eingangsöffnung 7 eine Ausgangsöffnung 8 zugeordnet ist. Dabei sind die Eingangsöffnungen und Ausgangsöffnungen in einer gemeinsamen waagerechten Ebene 62 in der Mitte des Verteilerrohrs angeordnet. Unter dieser Ebene 62 liegt eine Mitte 20a der Aktivierungszone 20 (vgl. Fig. 1).

Durch diese Anordnung wird erreicht, dass der geschmolzene Klebstoff 3a immer sicher durch die Schwerkraft in das geschlossene Behältnis 6 nachgeführt wird. Eine Oberfläche 30a des geschmolzenen Klebstoffs 3a liegt dabei immer über der Eingangsöffnung 7 und der Ausgangsöffnung 8. Dadurch kann sichergestellt werden, dass ein kontinuierlicher Nachschub von geschmolzenem Klebstoff 3a in das Verteilerrohr durch die Schwerkraft möglich ist.

Wie weiter aus den Figuren 1 bis 3 ersichtlich ist, ist das geschlossene Behältnis 6 brückenartig über der Arbeitsebene 17 und damit über den zu verbindenden Werkstücken 16 angeordnet.

Die Klebstofffadenvorrichtung 100 umfasst ferner eine Rohfadenrolle 12, von welcher ein Rohfaden 11 abwickelbar ist. Der Rohfaden 11 wird dabei in die Eingangsöffnung 7 zugeführt. In diesem Ausführungsbeispiel sind, wie aus den Figuren 1 und 3 ersichtlich, zwei Rohfadenrollen 12 vorgesehen. Der Rohfaden 11 wird durch die Eingangsöffnung 7 in das Innere des geschlossenen Behältnisses 6 zugeführt, in welchem sich der geschmolzene Klebstoff 3a luftfrei befindet. Dadurch wird der Rohfaden 11 am gesamten Außenumfang mit geschmolzenem Klebstoff benetzt. Der derart benetzte Rohfaden wird dann über die Ausgangsöffnung 8 als Klebstofffaden 10 herausgeführt. Dabei ist an der Ausgangsöffnung 8 eine Düse 9 vorgesehen, um eine Kalibrierung eines Durchmessers des Klebstofffadens 10 zu ermöglichen.

Die Düse 9 ist dabei austauschbar angeordnet, so dass verschiedene Düseneinsätze verwendet werden können, um unterschiedliche Durchmesser für den Klebstofffaden 10 bereitstellen zu können. Der derart mit Klebstoff benetzte Klebstofffaden 10 wird dann über eine Andrückrolle 13 auf einer Oberseite der Werkstücke 16, welche quer zum Klebstofffaden 10 zugeführt werden, aufgedrückt. Dadurch wird der Klebstofffaden auf die Oberseite der Werkstücke 16 aufgeklebt, was in den Figuren 1 bis 3 durch das Bezugszeichen 10' für den aufgeklebten Klebstofffaden gekennzeichnet ist.

Um eine geradlinige Zuführung des Rohfadens 11 in das geschlossene Behältnis 6 zu ermöglichen, ist an jeder Eingangsöffnung 7 ein dünnes Führungsrohr 70 angeordnet.

Wie weiter aus den Figuren 1 und 3 ersichtlich ist, ist in einem Bereich des geschlossenen Behältnisses 6 zwischen dem Klebstoffbehälter 2 und der ersten Rohfadenzuführung ein Ausdehnungsrohr 60 angeordnet. Das Ausdehnungsrohr 60 ermöglicht es, dass Volumenänderungen, welche beim Aufschmelzen des Klebstoffs auftreten können, ausgeglichen werden können und ein druckloser Zustand im geschlossenen Behältnis 6 aufrechterhalten werden kann. Dadurch kann sichergestellt werden, dass das geschlossene Behältnis 6 vollständig mit geschmolzenem Klebstoff 3a gefüllt ist. Das Ausdehnungsrohr 60 kann offen oder geschlossen ausgeführt sein.

Somit können erfindungsgemäß flache Werkstücke 16, in diesem Ausführungsbeispiel Parkettstäbe, durch einen oder mehrere Klebstofffäden 10 miteinander verbunden werden. Der Klebstofffaden 10 wird dabei unmittelbar vor dem Aufbringen auf die Werkstücke 16 derart erzeugt, dass der Rohfaden 11 durch ein mit oxidationsfrei geschmolzenem Klebstoff 3a vollständig gefülltes geschlossenes Behältnis 6 hindurchgeführt wird und an einer Ausgangsöffnung 8 mittels einer Düse 9 oder dergleichen kalibriert wird. Durch die Austauschbarkeit der Düse 9 kann dabei ein Maß des Klebstofffadens 10 eingestellt werden.

Der geschmolzene Klebstoff 3a kann dabei automatisch durch Schwerkraft in das geschlossene Behältnis 6 nachgeführt werden. Der Rohfaden 11 kann dabei mit einer beliebigen Durchlaufgeschwindigkeit durch das geschlossene Behältnis 6 hindurchgeführt werden, wobei aufgrund des nachströmenden, geschmolzenen Klebstoffs 3a immer sichergestellt ist, dass eine ausreichende Benetzung des Rohfadens 11 mit Klebstoff möglich ist.

Die erfindungsgemäße Vorrichtung kann dabei beispielsweise über Nacht problemlos abgeschaltet werden, wobei der geschmolzene Klebstoff 3a im geschlossenen Behältnis 6 sowie in der Aktivierungszone 20 aushärtet, wenn die Heizungen ausgeschaltet werden. Am nächsten Morgen kann dann die Vorrichtung 1 wieder einfach in Betrieb genommen werden, indem die Hauptheizung 4 und die Zusatzheizungen 5 eingeschaltet werden und der ausgehärtete Klebstoff wieder vollständig aufgeschmolzen wird. Dabei kommt der Klebstoff nicht mit Sauerstoff in Kontakt. Eine Verkokungsgefahr des Klebstoffs 3 ist dabei gering, da die Temperatur durch die Hauptheizung 4 und die Zusatzheizungen 5 gezielt gesteuert werden kann.

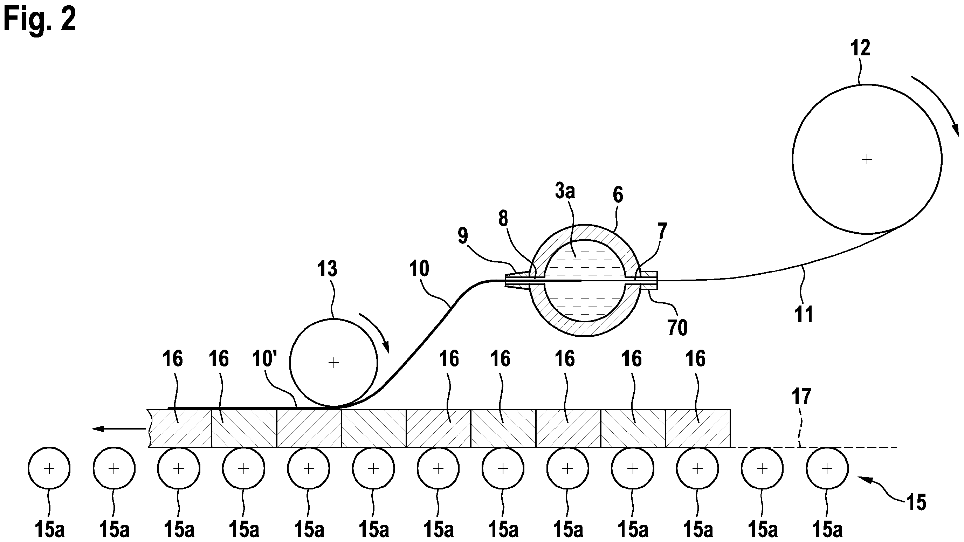

Da der Rohfaden 11 nur durch das mit geschmolzenem Klebstoff 3a gefüllte geschlossene Behältnis 6 hindurchgeführt wird, kann eine oxidationsfreie Benetzung des Rohfadens 11 mit Klebstoff ermöglicht werden. Im Vergleich mit offenen Behältnissen kann dabei eine Herstellung des Klebstofffadens 10 im Wesentlichen emissionsfrei und sicher ermöglicht werden. Darüber hinaus kann immer sichergestellt werden, dass eine exakte Kalibrierung des Klebstofffadens 10 ermöglicht wird, wobei die Durchlaufgeschwindigkeit des Rohfadens 11 beliebig geändert werden kann. Insbesondere vorteilhaft ist es, dass kein eigener Antrieb und keine Fördervorrichtung für den geschmolzenen Klebstoff vorgesehen werden muss, welche üblicherweise im Betrieb große Probleme hinsichtlich Verklebung und Verkokung verursachen würden. Wie aus Fig. 2 ersichtlich ist, kann die Anordnung der Werkstücke 16 auf der Rollenbahn 15 auch manuell unter dem geschlossenen Behältnis 6 hindurchgeschoben werden und dabei der Verbindungsvorgang mittels des Klebstofffadens 10 ermöglicht werden.

Soll neben der Oberseite auch die Unterseite der Werkstücke mit einem Klebstofffaden versehen werden, kann die aus mehreren Werkstücken 16 bestehende Werkstückanordnung beispielsweise auf einer Wendeplatte umgedreht werden oder manuell umgedreht werden und nochmals durch die Vorrichtung 1 hindurchgeschoben werden, wobei die Unterseite dann nach oben gerichtet ist, um entsprechend auf der Unterseite Klebstofffäden 10 aufzubringen.

Da die Wegstrecke des Klebstofffadens 10 zwischen dem Austritt aus der Düse 9 bis zum Aufbringen auf die Werkstücke 16 sehr kurz ist, kann der mit Klebstoff beschichtete Klebstofffaden 10 noch im thermoplastischen Zustand auf die Werkstücke 16 aufgebracht werden. Um ein Ankleben an den Andrückrollen 13 zu verhindern, können diese mit einem Antihaftmittel oder dergleichen benetzt sein.

Durch die Wahl des Volumens des geschlossenen Behältnisses 6 und die Wahl der Größe der Hauptheizung 4 kann auch das Volumen des geschmolzenen Klebstoffs 3a auf den jeweiligen Einsatzzweck optimiert werden und insbesondere zu große Mengen von geschmolzenem Klebstoff im Betrieb verhindert werden. Die Vorrichtung 1 ist ferner praktisch wartungsfrei, da auch nach einem Stillstand und einem Erstarren des geschmolzenen Klebstoffs dieser wieder problemlos aufgeschmolzen werden kann und der Rohfaden, welcher beim Ausschalten der Heizungen gemeinsam mit dem geschmolzenen Klebstoff im geschlossenen Behältnis 6 erstarrt, wieder freigegeben wird und durch Herausziehen durch die Ausgangsöffnung 8 und die Düse 9 die Vorrichtung sofort wieder einsatzbereit ist.

Es sei angemerkt, dass die Klebstofffadenvorrichtung 100 auch ohne die im Ausführungsbeispiel beschriebene Arbeitsebene 17 und Andrückeinrichtung 13 verwendet werden kann und der hergestellte Klebstofffaden einfach getrocknet und aufgerollt werden kann. Dadurch kann der Klebstofffaden dann zu einem späteren Zeitpunkt zum Verbinden von Werkstücken verwendet werden.

Neben der vorstehenden schriftlichen Beschreibung der Erfindung wird zu deren ergänzender Offenbarung hiermit explizit auf die zeichnerische Darstellung der Erfindung in den Fig. 1 bis 3 Bezug genommen.

### Bezugszeichenliste

- 1: Vorrichtung
- 2: Klebstoffbehälter
- 3: Klebstoff
- 3a: geschmolzener Klebstoff
- 3b: Klebstoffgranulat
- 4: Hauptheizung
- 5: Zusatzheizung
- 6: geschlossenes Behältnis / Verteilerrohr
- 6a: erstes Ende
- 6b: zweites Ende
- 7: Eingangsöffnung
- 8: Ausgangsöffnung
- 9: Düse
- 10: Klebstofffaden
- 10': auf Werkstücke aufgeklebter Klebstofffaden
- 11: Rohfaden
- 12: Rohfadenrolle
- 13: Andrückrolle
- 14: Kühleinheit
- 15: Rollenbahn
- 15a: Rollen
- 16: Werkstücke
- 17: Arbeitsebene
- 20: Aktivierungszone
- 20a: Mitte der Aktivierungszone
- 21: Lagerzone von Klebstoffgranulat
- 30a: Oberfläche des geschmolzenen Klebstoffs
- 60: Ausdehnungsrohr
- 61: Entlüftungsöffnung
- 62: Ebene
- 70: Führungsrohr an der Eingangsöffnung
- 100: Klebstofffadenvorrichtung

## Patentansprüche

1. Klebstofffadenvorrichtung zur Herstellung eines Klebstofffadens (10), umfassend:
- eine Zufuhreinrichtung zum Zuführen eines klebstofffreien Rohfadens (11),
- einen Klebstoffbehälter (2) zur Aufnahme und Lagerung eines Klebstoffgranulats (3b),
- eine Hauptheizung (4), welche an einem unteren Bereich des Klebstoffbehälters (2) angeordnet ist, um eine Aktivierungszone (20) des Klebstoffbehälters (2) zu definieren, in welchem das Klebstoffgranulat (3b) aufgeschmolzen wird,
- ein im Wesentlichen waagerecht angeordnetes geschlossenes Behältnis (6), welches mit einem ersten Ende (6a) mit der Aktivierungszone (20) des Klebstoffbehälters (2) verbunden ist,
- wobei das geschlossene Behältnis (6) wenigstens eine Eingangsöffnung (7) zum Zuführen und wenigstens eine Ausgangsöffnung (8) zum Abführen des Klebstofffadens (10) aufweist,
- wobei beim Durchführen des Rohfadens (11) durch das geschlossene Behältnis (6) der Rohfaden (11) an seiner gesamten Außenfläche oxidationsfrei mit Klebstoff benetzt wird, und
**gekennzeichnet, dadurch dass** ein zumindest teilweise luftgefülltes Ausdehnungsrohr (60) am geschlossenen Behältnis (6) angeordnet ist, um Volumenänderungen des geschmolzenen Klebstoffs ausgleichen zu können.

2. Klebstofffadenvorrichtung nach Anspruch 1, wobei an der Ausgangsöffnung (8) eine Düse (9) angeordnet ist, um eine Kalibrierung des Klebstofffadens (10) auszuführen und wobei am geschlossenen Behältnis (6) wenigstens eine Zusatzheizung (5) angeordnet ist, um den geschmolzenen Klebstoff (3a) im geschlossenen Behältnis (6) auf einer vorbestimmten Temperatur im geschmolzenen Zustand zu halten.

3. Klebstofffadenvorrichtung nach einem der vorherigen Ansprüche, wobei das geschlossene Behältnis (6) ein Verteilerrohr ist.

4. Klebstofffadenvorrichtung nach einem der vorhergehenden Ansprüche, umfassend eine Vielzahl von Rohfäden (11), eine Vielzahl von Eingangsöffnungen (7) und eine Vielzahl von Ausgangsöffnungen (8), wobei die Rohfäden parallel zu jeweils einer separaten Eingangsöffnung (7) zugeführt werden und aus einer der separaten Eingangsöffnung zugeordneten separaten Ausgangsöffnung (8) herausgeführt werden.

5. Klebstofffadenvorrichtung nach einem der vorhergehenden Ansprüche,
- ferner umfassend eine Kühleinheit 14, welche am Klebstoffbehälter (2) über der Hauptheizung (4) angeordnet ist und/oder
- wobei die Ausgangsöffnung (8) in oder unter einer Mitte (20a) der Aktivierungszone (20) des Klebstoffbehälters (2) liegt.

6. Klebstofffadenvorrichtung nach einem der vorhergehenden Ansprüche, ferner umfassend ein Ausdehnungsrohr (60), welches am geschlossenen Behältnis (6), insbesondere zwischen dem Klebstoffbehälter (2) und der Ausgangsöffnung (8), angeordnet ist.

7. Klebstofffadenvorrichtung nach einem der vorhergehenden Ansprüche, ferner umfassend eine Fördereinrichtung, insbesondere einen heizbaren Extruder, welche eingerichtet ist, den geschmolzenen Klebstoff im wesentlichen drucklos in des geschlossene Behältnis (6) zu fördern und/oder im geschlossenen Behältnis zu fördern.

8. Vorrichtung zum Verbinden von Werkstücken (16) mit einem Klebstofffaden (10), umfassend:
- eine Klebstofffadenvorrichtung nach einem der Ansprüche 1 bis 7,
- eine Arbeitsebene (17) zum Auflegen der zu verbindenden Werkstücke (16), welche unterhalb des geschlossenen Behältnisses (6) verläuft, und
- eine Andrückeinrichtung (13), um den Klebstofffaden (10) auf die zu verbindenden Werkstücke (16) anzudrücken.

9. Vorrichtung nach Anspruch 8, wobei der Klebstofffaden (10) über der Arbeitsebene (17) auf die Werkstücke (16) zugeführt wird.

10. Vorrichtung nach einem der Ansprüche 8 oder 9, ferner umfassend ein zweites geschlossenes Behältnis, welches mit der Aktivierungszone (20) des Klebstoffbehälters (2) verbunden ist, wobei das erste geschlossene Behältnis (6) über der Arbeitsebene (17) angeordnet ist und das zweite geschlossene Behältnis unter der Arbeitsebene (17) angeordnet ist.

11. Herstellverfahren zum Herstellen eines Klebstofffadens (10) umfassend die Schritte:
- teilweises Schmelzen eines Klebstoffgranulats (3b) zu einem geschmolzenen Klebstoff (3a) in einer Aktivierungszone (20) eines Klebstoffbehälters (2), wobei über der Aktivierungszone (20) eine Lagerzone (21) von Klebstoffgranulat verbleibt,
- Zuführen des geschmolzenen Klebstoffs (3a) in ein geschlossenes Behältnis (6) ausschließlich mittels Schwerkraft oder mit einer Fördereinrichtung, welche eingerichtet ist, den geschmolzenen Klebstoff im wesentlichen drucklos zu fördern, wobei ein zumindest teilweise luftgefülltes Ausdehnungsrohr (60) am geschlossenen Behältnis (6) angeordnet ist, um Volumenänderungen des geschmolzenen Klebstoffs ausgleichen zu können,
- Zuführen eines Rohfadens (11) durch eine Eingangsöffnung (7) in das geschlossene Behältnis (6) zum oxidationsfreien Beschichten einer gesamten Außenfläche des Rohfadens (11) mit geschmolzenem Klebstoff zu einem Klebstofffaden (10) und Herausführen des Klebstofffadens (10) über eine Ausgangsöffnung (8) aus dem geschlossenen Behältnis (6).

12. Herstellverfahren nach Anspruch 11,
- wobei der Klebstofffaden (10) beim Herausführen aus dem geschlossenen Behältnis (6) kalibriert wird, insbesondere mittels einer Düse (9) und/oder
- wobei mehrere Klebstofffäden (10) parallel und gleichzeitig hergestellt werden.

13. Herstellverfahren nach einem der Ansprüche 11 oder 12, wobei der Klebstoff im geschlossenen Behältnis (6) zusätzlich erwärmt wird und/oder
wobei der Klebstoff im Klebstoffbehälter (2) teilweise gekühlt wird.

14. Verfahren zum Verbinden von Werkstücken (16) mit einem Klebstofffaden (10) umfassend die Schritte:
- Herstellen eines Klebstofffadens gemäß einem Herstellverfahren nach einem der Ansprüche 11 bis 13,
- Zuführen der zu verbindenden Werkstücke (16) auf einer Arbeitsebene (17), und
- direktes Aufbringen des aus der Ausgangsöffnung (8) herausgeführten Klebstofffadens (10) auf die zu verbindenden Werkstücke (16).

15. Verfahren nach Anspruch 14, wobei ein Vorschub des Rohfadens (11) durch einen Vorschub der zu verbindenden Werkstücke (16) ausgeführt wird.

## Claims

1. An adhesive thread device for producing an adhesive thread (10), comprising
- a feeding device for supplying an adhesive-free crude thread (11),
- an adhesive tank (2) for receiving and storing an adhesive granulate (3b),
- a main heater (4) arranged at a lower portion of the adhesive tank (2) to define an activation zone (20) of the adhesive tank (2), where the adhesive granulate (3b) is melted,
- a substantially horizontally arranged closed receptacle (6), which is connected to the activation zone (20) of the adhesive tank (2) with a first end (6a) ,
- wherein the closed receptacle (6) comprises at least one inlet opening (7) for feeding and at least one outlet opening (8) for withdrawing the adhesive thread (10),
- wherein, when passing the crude thread (11) through the closed receptacle (6), the entire outer surface of the crude thread (11) is wetted with adhesive in an oxidation-free manner, and **characterized in that**
- an at least partially air-filled expansion tube (60) is arranged on the closed receptacle (6) in order to compensate for changes in volume of the molten adhesive.

2. The adhesive thread device according to claim 1, wherein a nozzle (9) is arranged at the outlet opening (8) to perform calibration of the adhesive thread (10) and wherein at least one additional heater (5) is arranged at the closed receptacle (6) to maintain the molten adhesive (3a) in the closed receptacle (6) at a predetermined temperature in the molten state.

3. The adhesive thread device according to one of the preceding claims, wherein the closed receptacle (6) is a manifold tube.

4. The adhesive thread device according to one of the preceding claims, comprising a plurality of crude threads (11), a plurality of inlet openings (7) and a plurality of outlet openings (8), wherein the crude threads are supplied in parallel to a separate inlet opening (7), respectively, and are guided out of a separate outlet opening (8) associated with the separate inlet opening.

5. The adhesive thread device according to one of the preceding claims,
- further comprising a cooling unit 14 arranged on the adhesive tank (2) above the main heater (4) and/or
- wherein the outlet opening (8) is located in or below a center (20a) of the activation zone (20) of the adhesive tank (2).

6. The adhesive thread device according to one of the preceding claims, further comprising an expansion tube (60) arranged at the closed receptacle (6), in particular between the adhesive tank (2) and the outlet opening (8).

7. The adhesive thread device according to one of the preceding claims, further comprising a conveyor device, in particular a heatable extruder, which is arranged to substantially pressurelessly convey the molten adhesive into the closed receptacle (6) and/or to convey it in the closed receptacle.

8. A device for joining workpieces (16) using an adhesive thread (10), comprising
- an adhesive thread device according to one of the claims 1 to 7,
- a working plane (17) for placing the workpieces (16) to be joined, which extends below the closed receptacle (6), and
- a press-on device (13) for pressing the adhesive thread (10) onto the workpieces (16) to be joined.

9. The device according to claim 8, wherein the adhesive thread (10) is supplied above the working plane (17) onto the workpieces (16).

10. The device according to one of the claims 8 or 9, further comprising a second closed receptacle connected to the activation zone (20) of the adhesive tank (2), wherein the first closed receptacle (6) is arranged above the working plane (17) and the second closed receptacle is arranged below the working plane (17).

11. A production method for producing an adhesive thread (10) comprising the steps of
- partially melting an adhesive granulate (3b) to obtain a molten adhesive (3a) in an activation zone (20) of an adhesive tank (2), a storage zone (21) of adhesive granulate remaining above the activation zone (20),
- feeding the molten adhesive (3a) into a closed receptacle (6) exclusively by gravitational action, or using a conveyor device which is arranged to convey the molten adhesive essentially in a pressureless manner, wherein an at least partially air-filled expansion tube (60) is arranged on the closed receptacle (6) in order to compensate for changes in volume of the molten adhesive,
- supplying a crude thread (11) into the closed receptacle (6) through an inlet opening (7) for coating an entire outer surface of the crude thread (11) with molten adhesive to form an adhesive thread (10) in an oxidation-free manner, and guiding the adhesive thread (10) out of the closed receptacle (6) through an outlet opening (8).

12. The production method according to claim 11,
- wherein the adhesive thread (10) is calibrated when it is guided out of the closed receptacle (6), in particular by use of a nozzle (9) and/or
- wherein a plurality of adhesive threads (10) are produced in parallel and simultaneously.

13. The production method according to one of claims 11 or 12, wherein the adhesive in the closed receptacle (6) is heated in addition and/or wherein the adhesive in the adhesive tank (2) is partially cooled.

14. A method of joining workpieces (16) using an adhesive thread (10) comprising the steps of:
- producing an adhesive thread according to a production method according to any one of claims 11 to 13,
- feeding the workpieces (16) to be joined onto a working plane (17), and
- directly applying the adhesive thread (10) withdrawn from the outlet opening (8) to the workpieces (16) to be joined.

15. The method according to claim 14, wherein an advance of the crude thread (11) is performed by advancing the workpieces (16) to be joined.

## Revendications

1. Dispositif de fil adhésif pour la fabrication d'un fil adhésif (10) comprenant :
- un dispositif d'alimentation pour l'alimentation d'un fil brut (11) sans colle,
- un récipient de colle (2) pour la réception et le logement d'un granulat de colle (3b),
- un dispositif de chauffage principal (4) qui est agencé au niveau d'une zone inférieure du récipient de colle (2) afin de définir une zone d'activation (20) du récipient de colle (2), dans lequel le granulat de colle (3b) est fondu,
- un récipient fermé (6) agencé sensiblement horizontalement qui est relié à une première extrémité (6a) à la zone d'activation (20) du récipient de colle (2),
- dans lequel le récipient (6) fermé présente au moins une ouverture d'entrée (7) pour l'alimentation et au moins une ouverture de sortie (8) pour l'évacuation du fil adhésif (10),
- dans lequel lors du passage du fil brut (11) à travers le récipient fermé (6), le fil brut (11) est arrosé au niveau de sa surface extérieure entière sans oxydation avec de la colle, et
**caractérisé en ce que**
un tube d'expansion (60) rempli d'air au moins partiellement est agencé au niveau du récipient (6) fermé afin de pouvoir compenser des modifications de volume de la colle fondue.

2. Dispositif de fil adhésif selon la revendication 1, dans lequel une buse (9) est agencée au niveau de l'ouverture de sortie (8) afin de réaliser un étalonnage du fil adhésif (10) et dans lequel au moins un dispositif de chauffage supplémentaire (5) est agencé au niveau du récipient (6) fermé afin de maintenir la colle (3a) fondue dans le récipient (6) fermé à une température prédéterminée dans l'état fondu.

3. Dispositif de fil adhésif selon l'une quelconque des revendications précédentes, dans lequel le récipient fermé (6) est un tube de distribution.

4. Dispositif de fil adhésif selon l'une quelconque des revendications précédentes, comprenant une pluralité de fils bruts (11), une pluralité d'ouvertures d'entrée (7) et une pluralité d'ouvertures de sortie (8), dans lequel les fils bruts sont fournis parallèlement à respectivement une ouverture d'entrée (7) séparée et sont guidés hors d'une ouverture de sortie (8) séparée associée à l'ouverture d'entrée séparée.

5. Dispositif de fil adhésif selon l'une quelconque des revendications précédentes,
- comprenant de plus une unité de refroidissement (14) qui est agencée au niveau du récipient de colle (2) au-dessus du dispositif de chauffage principal (4) et/ou
- dans lequel l'ouverture de sortie (8) se trouve dans ou sous un milieu (20a) de la zone d'activation (20) du récipient de colle (2).

6. Dispositif de fil adhésif selon l'une quelconque des revendications précédentes, comprenant de plus un tube d'expansion (60) qui est agencé au niveau du récipient fermé (6), en particulier entre le récipient de colle (2) et l'ouverture de sortie (8).

7. Dispositif de fil adhésif selon l'une quelconque des revendications précédentes, comprenant de plus un dispositif de transport, en particulier une extrudeuse pouvant être chauffée, qui est conçu afin de transporter la colle fondue sensiblement sans pression dans le récipient (6) fermé et/ou de la transporter dans le récipient fermé.

8. Dispositif de liaison de pièces à usiner (16) avec un fil adhésif (10) comprenant :
- un dispositif de fil adhésif selon l'une quelconque des revendications 1 à 7,
- un plan de travail (17) pour le placement des pièces à usiner (16) à relier qui s'étend en dessous du récipient fermé (6), et
- un dispositif de pressage (13) afin de presser le fil adhésif (10) sur les pièces à usiner (16) à relier.

9. Dispositif selon la revendication 8, dans lequel le fil adhésif (10) est fourni au-dessus du plan de travail (17) sur les pièces à usiner (16).

10. Dispositif selon l'une quelconque des revendications 8 ou 9, comprenant de plus un second récipient fermé qui est relié à la zone d'activité (20) du récipient de colle (2), dans lequel le premier récipient fermé (6) est agencé au-dessus du plan de travail (17) et le second récipient fermé est agencé en dessous du plan de travail (17).

11. Procédé de fabrication pour la fabrication d'un fil adhésif (10) comprenant les étapes suivantes :
- la fusion partielle d'un granulat de colle (3b) en une colle (3a) fondue dans une zone d'activation (20) d'un récipient de colle (2), dans lequel une zone de stockage (21) de granulat de colle reste au-dessus de la zone d'activation (20),
- la fourniture de la colle (3a) fondue dans un récipient fermé (6) exclusivement au moyen de la force de gravité ou avec un dispositif de transport qui est conçu afin de transporter sensiblement sans pression la colle fondue, dans lequel un tube d'expansion (60) au moins partiellement rempli d'air est agencé au niveau du récipient fermé (6) afin de pouvoir compenser des modifications de volume de la colle fondue,
- la fourniture d'un fil brut (11) par une ouverture d'entrée (7) dans le récipient fermé (6) pour le revêtement sans oxydation d'une surface extérieure entière du fil brut (11) avec de la colle fondue en un fil adhésif (10) et le guidage du fil adhésif (10) par le biais d'une ouverture de sortie (8) hors du récipient fermé (6).

12. Procédé de fabrication selon la revendication 11,
- dans lequel le fil adhésif (10) est étalonné lors du guidage hors du récipient fermé (6), en particulier au moyen d'une buse (9) et/ou
- dans lequel plusieurs fils de colle (10) sont fabriqués parallèlement et simultanément.

13. Procédé de fabrication selon l'une quelconque des revendications 11 ou 12, dans lequel la colle est en outre chauffée dans le récipient fermé (6) et/ou
dans lequel la colle est partiellement refroidie dans le récipient de colle (2).

14. Procédé de liaison de pièces à usiner (16) avec un fil adhésif (10) comprenant les étapes suivantes :
- la fabrication d'un fil adhésif selon un procédé de fabrication selon l'une quelconque des revendications 11 à 13,
- l'alimentation des pièces à usiner (16) à relier sur un plan de travail (17) et
- l'application directe du fil adhésif (10) guidée hors de l'ouverture de sortie (8) sur les pièces à usiner (16) à relier.

15. Procédé selon la revendication 14, dans lequel une avance du fil brut (11) est réalisée par une avance des pièces à usiner (16) à relier.
